# EUROPEAN PATENT APPLICATION

(11) **EP 4 447 221 A1**
(43) Date of publication of application: **16.10.2024**
(21) Application number: 21969357.9
(22) Date of filing: 28.12.2021
(51) Int. Cl.: H01P 5/107, H01P 3/00

(54) **ADAPTER STRUCTURE, ANTENNA AND TERMINAL**

(71) Applicant: Huawei Technologies Co., Ltd., Shenzhen, Guangdong 518129 (CN)
(72) Inventor: HE, Yin, Shenzhen, Guangdong 518129 (CN); TANG, Zhongshan, Shenzhen, Guangdong 518129 (CN); GAO, Chen, Shenzhen, Guangdong 518129 (CN); PENG, Daqing, Shenzhen, Guangdong 518129 (CN); YANG, Xiaopan, Shenzhen, Guangdong 518129 (CN)
(74) Representative: Gill Jennings & Every LLP
(86) International application number: PCT/CN2021/142161
(87) International publication number: WO 2023/122978

(57) **Abstract**

Embodiments of this application provide a transfer structure, an antenna, and a terminal. The transfer structure includes a circuit board, where the circuit board includes a first metal layer, a second metal layer, and a dielectric layer, the dielectric layer is located between the first metal layer and the second metal layer, the first metal layer includes a radiation portion and a microstrip, the microstrip is connected to one end of the radiation portion, and the second metal layer is grounded. The radiation portion is provided with an opening, to enable the radiation portion to form at least two resonance frequencies. According to solutions provided in embodiments of this application, operating bandwidth of the transfer structure can be extended.

## Description

### TECHNICAL FIELD

This application relates to the field of communications technologies, and more specifically, to a transfer structure, an antenna, and a terminal.

### BACKGROUND

With development and progress of science and technology, intelligence of vehicles has gradually become a research hotspot in the vehicle field. A vehicle with intelligent (intelligent vehicle for short) can bring more safe and comfortable driving experience to people. For example, a plurality of sensors may be installed on the intelligent vehicle, so that surrounding environment information of the intelligent vehicle is obtained by using the sensors, and assisted driving or self-driving is implemented based on the surrounding environment information. The sensor includes, for example, a camera, laser radar, millimeter-wave radar, and an ultrasonic sensor.

The millimeter-wave radar uses a millimeter wave as a detection medium, and can measure a distance, an angle, a moving speed, and the like from the millimeter-wave radar to a to-be-measured object. The millimeter-wave radar may send a signal to an antenna radiator by using a feed. The antenna radiator may radiate the signal to a waveguide. The waveguide transfers the signal. In this way, the millimeter-wave radar can detect a position, a moving speed, and the like of the to-be-measured object in a relative accurate manner. Effective bandwidth of the millimeter-wave radar has great impact on millimeter wave performance. How to improve the effective bandwidth of the millimeter-wave radar is a problem to be resolved.

### SUMMARY

Embodiments of this application provide a transfer structure, to extend an operating bandwidth range of the transfer structure.

According to a first aspect, a transfer structure is provided. The transfer structure includes a circuit board, where the circuit board includes a first metal layer, a second metal layer, and a dielectric layer, the dielectric layer is located between the first metal layer and the second metal layer, the first metal layer includes a radiation portion and a microstrip, the microstrip is connected to one end of the radiation portion, and the second metal layer is grounded. The radiation portion is provided with an opening, to enable the radiation portion to form at least two resonance frequencies.

This application provides the transfer structure. The transfer structure includes the circuit board, and the dielectric layer on the circuit board is located between the first metal layer and the second metal layer. The transfer structure provided in this application helps reduce space corresponding to a metal back cavity, and reduces an overall thickness of the circuit board, so that the transfer structure is easily integrated with another component. The opening of the radiation portion on the first metal layer extends bandwidth of the transfer structure, so that the transfer structure can be used in more scenarios.

With reference to the first aspect, in some implementations of the first aspect, the transfer structure further includes a waveguide located on a side that is of the circuit board and that is close to the first metal layer, the waveguide includes a microstrip avoidance groove and a waveguide port, the microstrip is disposed opposite to the microstrip avoidance groove at an interval from a groove wall of the microstrip avoidance groove, the waveguide port is disposed opposite to the radiation portion, and a signal emitted by the radiation portion passes through the waveguide port and is emitted out of the transfer structure.

The transfer structure in this application further improves the waveguide. The waveguide includes the waveguide port and the microstrip avoidance groove. Existence of the microstrip avoidance groove enables, when the waveguide cooperates with the circuit board, a possibility of electromagnetic wave energy leakage to be reduced or an amount of electromagnetic wave energy leakage caused by contact between the microstrip and the waveguide to be reduced, so that an electromagnetic wave can enter the radiation portion from the microstrip on the circuit board, and then be radiated out of the entire transfer structure through the waveguide port.

With reference to the first aspect, in some implementations of the first aspect, the radiation portion is a rectangle, and the microstrip is disposed to be deviated from an axis of symmetry of the radiation portion.

The radiation portion and the axis of symmetry of the microstrip on the circuit board are disposed to be deviated from each other. This helps reduce energy reflection caused by transition of the electromagnetic wave from the microstrip to the radiation portion, that is, enhance impedance matching of the transition of the electromagnetic wave from the microstrip to the radiation portion, and improves matching bandwidth of the transfer structure.

With reference to the first aspect, in some implementations of the first aspect, the opening is a strip-shaped opening, and the opening is disposed at an interval from an edge of the radiation portion.

The opening of the radiation portion is located inside the radiation portion, and the strip-shaped opening inside the radiation portion enables current to form a plurality of resonance frequencies near the strip-shaped opening, so that an operating bandwidth range of the transfer structure is extended.

With reference to the first aspect, in some implementations of the first aspect, the opening is a strip-shaped opening, and one end of the opening is connected to an edge that is of the radiation portion and that is far away from an edge connected to the microstrip.

The opening of the radiation portion is connected to the edge that is of the radiation portion and that is far away from the edge of the radiation portion and the microstrip, and a current diffraction path is increased by using several openings connected to the edge, so that operating bandwidth of the transfer structure is increased.

With reference to the first aspect, in some implementations of the first aspect, the opening includes a first strip-shaped opening segment and a second strip-shaped opening segment, and one end of the second strip-shaped opening segment is connected to one end of the first strip-shaped opening segment.

In this embodiment of this application, the ends of the two strip-shaped opening segments are connected, so that a specific angle can be formed. When passing through the radiation portion, the electromagnetic wave may bypass a structure formed by the two strip-shaped opening segments, and be emitted near the structure formed by the two strip-shaped opening segments, so that a radiation position of energy of the electromagnetic wave is increased, and the operating bandwidth of the transfer structure is improved.

With reference to the first aspect, in some implementations of the first aspect, the opening further includes a third strip-shaped opening segment, the third strip-shaped opening segment is connected to the other end of the second strip-shaped opening segment, the other end of the second strip-shaped opening segment is far away from the end connected to the first strip-shaped opening segment, and the third strip-shaped opening segment is parallel to and disposed at an interval from the first strip-shaped opening segment.

A structure formed by the three opening segments of the radiation portion further increases a current resonance point, and extends the operating bandwidth range of the transfer structure.

With reference to the first aspect, in some implementations of the first aspect, the second strip-shaped opening segment is disposed vertically relative to the first strip-shaped opening segment.

The opening of the radiation portion is approximately a U-shaped opening, so that the radiation portion forms a multi-tuned circuit. In this way, a quality factor is reduced, and the bandwidth range of the radiation portion is increased.

With reference to the first aspect, in some implementations of the first aspect, a length of the opening ranges from 0.5*λ to 1.5*λ. For example, the length of the opening may be 0.5*λ, λ, or 1.5*λ. A width of the opening ranges from 0.01*λ to 0.2*λ. For example, the width of the opening may be 0.05*λ or 0.1 *λ. λ is an operating wavelength of the transfer structure.

The opening is strip-shaped, and has a total length approximately ranging from 0.5*λ to 1.5*λ and a width approximately ranging from 0.01*λ to 0.2*λ. A specific shape may not be limited, so that openings of different shapes of the radiation portion can increase the current diffraction path, and increase the operating bandwidth of the transfer structure.

With reference to the first aspect, in some implementations of the first aspect, the opening includes a fourth strip-shaped opening segment and a fifth strip-shaped opening segment. The fourth strip-shaped opening segment extends along a first direction to a first edge of the radiation portion, the fifth strip-shaped opening segment extends along a second direction to the first edge, and the fourth strip-shaped opening segment intersects with the fifth strip-shaped opening segment on the first edge.

The opening on the radiation portion is V-shaped, so that the current diffraction path is increased, and the operating bandwidth of the transfer structure is increased.

With reference to the first aspect, in some implementations of the first aspect, the first edge is adjacent to an edge that is of the radiation portion and that is connected to the microstrip.

A vertex of the V-shaped opening of the radiation portion is located on the adjacent edge of the edge that is of the radiation portion and that is connected to the microstrip, so that an actual length of the adjacent edge increases, and the edge of the adjacent edge extends to the inside of the radiation portion. In this way, energy radiated by the electromagnetic wave is redistributed, and the operating bandwidth range of the transfer structure is increased.

With reference to the first aspect, in some implementations of the first aspect, the waveguide further includes a shielding groove, and the shielding groove is disposed on a side that is of the waveguide and that is close to the waveguide port, and is disposed at an interval from the waveguide port and the microstrip avoidance groove.

The shielding groove around the waveguide port can reduce electromagnetic wave energy leakage, so that most energy can be radiated out of the transfer structure through the waveguide port.

With reference to the first aspect, in some implementations of the first aspect, the shielding groove surrounds a periphery of the waveguide port.

The shielding groove surrounds the periphery of the waveguide port, so that a relatively large quantity of areas of the waveguide port can be encircled by the shielding groove. This helps limit an energy loss, and improves energy utilization in a transfer process.

With reference to the first aspect, in some implementations of the first aspect, a depth of the shielding groove is an odd multiple of λ/4, and λ is an operating wavelength of the transfer structure.

A shape of the shielding groove on the waveguide may not be limited, for example, may be a rectangular long strip. The rectangular long strip-shaped shielding groove helps reduce energy leaked from one side of the long strip. For another example, the shielding groove may alternatively encircle the waveguide port, to better reduce electromagnetic wave energy leakage. The depth of the shielding groove is set to an odd multiple of λ/4, so that the shielding groove has relatively large impedance after impedance conversion.

With reference to the first aspect, in some implementations of the first aspect, the waveguide further includes a waveguide body and a boss, and the boss protrudes from the waveguide body towards the circuit board, and is in contact with the circuit board. For example, the waveguide body and the boss may be integrally formed.

The waveguide is in contact with the circuit board by using the disposed boss, to reduce a contact area, thereby reducing impact of a processing size tolerance of the waveguide or the circuit board on assembly.

With reference to the first aspect, in some implementations of the first aspect, the first metal layer further includes a first transition portion configured for impedance matching between the microstrip and the radiation portion, and the first transition portion is connected between the radiation portion and the microstrip along a direction from the radiation portion to the microstrip.

The transition segment is disposed between the radiation portion and the microstrip, so that impedance on a transmission path can be in a gradient state, and an energy loss caused by reflection and the like in an electromagnetic wave transmission process can be reduced.

With reference to the first aspect, in some implementations of the first aspect, the first metal layer further includes a grounding portion, the grounding portion surrounds a periphery of the radiation portion and the periphery of the microstrip, and is disposed at an interval from the radiation portion and the microstrip, the grounding portion is in contact with the waveguide, and the grounding portion is conducted with the second metal layer.

The outside of the radiation portion surrounds the grounding portion, so that the waveguide is in good contact with the grounding portion when the waveguide cooperates with the circuit board.

With reference to the first aspect, in some implementations of the first aspect, the grounding portion is conducted with the second metal layer through a plated through hole or a metal wall.

The plated through hole between the grounding portion and the second metal layer enables the grounding portion to be in good contact with the second metal layer. In addition, the metal wall or the plated through hole can further limit radiation of electromagnetic wave energy, so that efficiency of the transfer structure is improved.

With reference to the first aspect, in some implementations of the first aspect, an orthographic projection of the waveguide port on the circuit board is located in an area encircled by an inner profile of the grounding portion.

The area encircled by the inner profile of the grounding portion is a transfer area between the circuit board and the waveguide. The transfer area may be slightly greater than a size of the waveguide port, so that impact of an alignment error on transfer performance is reduced, and good transfer performance is implemented.

With reference to the first aspect, in some implementations of the first aspect, the grounding portion includes a grounding portion body and a grounding extension portion, the grounding extension portion is opposite to and disposed at an interval from a joint between the microstrip and the radiation portion, and the grounding extension portion extends from the grounding portion body towards the joint.

The grounding portion is provided with the grounding extension portion, and the grounding extension portion extends to the joint between the radiation portion and the microstrip. The grounding extension portion can be disposed to increase an impedance matching degree of electromagnetic wave transmission.

According to a second aspect, an antenna is provided. The antenna includes the transfer structure according to any one of the implementations of the first aspect.

According to a third aspect, a detection apparatus is provided. The detection apparatus includes the antenna according to any one of the implementations of the second aspect. For example, the detection apparatus is radar.

According to a fourth aspect, a terminal is provided. The terminal includes the detection apparatus according to any one of the implementations of the third aspect.

With reference to the fourth aspect, in some implementations of the fourth aspect, the terminal is a vehicle.

According to a fifth aspect, a vehicle is provided. The vehicle includes the detection apparatus according to any one of the implementations of the third aspect.

### BRIEF DESCRIPTION OF DRAWINGS

FIG. 1 is a diagram of a scenario to which a transfer structure according to an embodiment of this application is applicable;
FIG. 2 is a perspective view of a transfer structure according to an embodiment of this application;
FIG. 3 is a schematic structural diagram of a first metal layer on a circuit board corresponding to FIG. 2;
FIG. 4 is a schematic structural diagram of a first transition portion corresponding to FIG. 3;
FIG. 5 is a perspective view of another transfer structure according to an embodiment of this application;
FIG. 6(a) and FIG. 6(b) are schematic structural diagrams of a first end surface of a waveguide corresponding to FIG. 5;
FIG. 7 is a projection diagram corresponding to FIG. 5;
FIG. 8 is a schematic structural diagram of an opening of a radiation portion according to an embodiment of this application;
FIG. 9 is a simulation result diagram of the opening of the radiation portion corresponding to FIG. 8;
FIG. 10 is a schematic structural diagram of an opening of a radiation portion according to an embodiment of this application;
FIG. 11 is a schematic structural diagram of an opening of a radiation portion according to an embodiment of this application;
FIG. 12 is a schematic structural diagram of an opening of a radiation portion according to an embodiment of this application;
FIG. 13 is a schematic structural diagram of an array of a transfer structure according to an embodiment of this application; and
FIG. 14 is a schematic diagram of another transfer structure according to an embodiment of this application.

### DESCRIPTION OF EMBODIMENTS

The following describes technical solutions in embodiments of this application with reference to the accompanying drawings in embodiments of this application. Clearly, the described embodiments are merely some but not all of embodiments of this application. All other embodiments obtained by a person of ordinary skill in the art based on embodiments of this application without creative efforts shall fall within the protection scope of this application.

The technical solutions disclosed in this application use application in a radar field as an example, but are not limited to a radar system. The transfer structure may be applied to any scenario in which transfer between a waveguide and a circuit board is required.

A circuit board used in this application may be a common printed circuit board (printed circuit board, PCB), or may be a substrate integrated waveguide (substrate integrated waveguide, SIW).

A waveguide used in this application may be a rectangular waveguide, or may be a tubular waveguide having another non-standard or standard waveguide port. The following uses a metal waveguide having a rectangular waveguide port as an example to describe main technical solutions of this application. When the waveguide port is in another shape, a similar case is used.

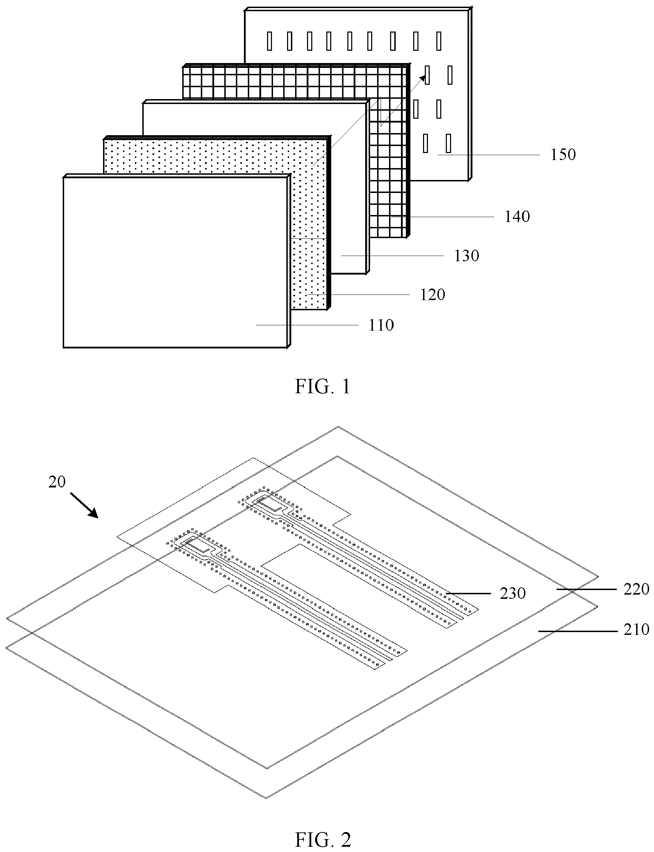

FIG. 1 is a schematic structural diagram of radar, in a waveguide antenna form, to which a transfer structure in this application is applicable. As shown in FIG. 1, the radar includes a shield layer 110, a PCB layer 120, a cooling layer 130, a filter/feed layer 140, and a radiation layer 150.

The shield layer 110 is configured to reduce impact of an external electromagnetic field on an entire antenna. The shield layer can be grounded, so that an external interference signal is guided to the ground by the layer. The shield layer may further prevent a circuit inside the antenna from radiating electromagnetic energy to the outside, so that a loss of internal signal transmission is reduced. The shield layer may further have excellent thermal conductivity, to conduct heat generated by an internal line out of the entire apparatus, so that the internal line operates at a relatively stable temperature.

An active device is located at the PCB layer 120, and can process a signal generated by the active device. The processed signal may enter a next-layer structure from the layer through radiation or by using a transmission line.

The cooling layer 130 is located between the PCB layer 120 and a filter/feed layer 140. Similar to the shield layer, the cooling layer 130 can quickly conduct heat generated in the antenna out of an entire antenna system. A specific shape design of the layer may further facilitate transition between the PCB layer 120 and the filter/feed layer 140.

The filter/feed layer 140 is configured to perform processing such as filtering on the signal from the PCB layer 120, to obtain an electromagnetic wave within a specific bandwidth range.

The radiation layer 150 includes a slot radiation array formed by several slots, and is configured to radiate, by using the array, the electromagnetic wave processed by the filter/feed layer 140 out of the entire millimeter-wave antenna apparatus.

In the radar shown in FIG. 1, transfer associated with the PCB layer 120 has great impact on performance of the entire apparatus. Therefore, in the technical solutions provided in this application, transfer between the PCB layer 120 and the waveguide is optimized, so that a relatively wide bandwidth range is covered, and an advantage of a low cross-sectional area is provided. This facilitates installation of the entire module.

FIG. 2 is a perspective view of a transfer structure according to an embodiment of this application. As shown in FIG. 2, the transfer structure provided in this embodiment of this application may include a circuit board 20.

The circuit board 20 in FIG. 2 may be the PCB layer 120 in FIG. 1. The circuit board 20 includes a first metal layer 230, a second metal layer 210, and a dielectric layer 220. The dielectric layer 220 is located between the first metal layer 230 and the second metal layer 210. The dielectric layer 220 may be an insulation material, and the second metal layer 210 is grounded.

In an embodiment, the first metal layer 230 and the second metal layer 210 may be two adjacent metal layers on the circuit board 20. The first metal layer 230 and the second metal layer 210 may be disposed on two surfaces of the dielectric layer 220 in a manner such as electroplating.

In this embodiment of this application, to reduce processing difficulty and manufacturing costs, the circuit board 20 uses a structure without a back cavity. The dielectric layer 220 is directly below the first metal layer 230 without any other metal back cavity between the first metal layer 230 and the dielectric layer 220. In this way, processing difficulty can be effectively reduced, and a thickness of the entire circuit board 20 is relatively small, so that costs are effectively reduced.

For example, a thickness of a vehicle-mounted radar plate NF30 is only 0.05 mm to 0.2 mm, for example, may be 0.12 mm.

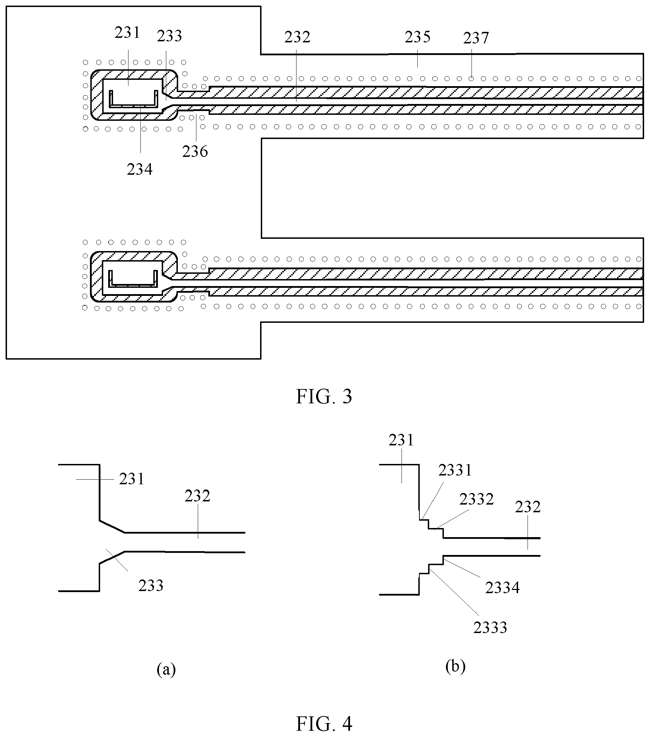

FIG. 3 shows a structure of a first metal layer 230 on a circuit board 20 of a transfer structure according to this application. As shown in FIG. 3, the first metal layer 230 includes a radiation portion 231 and a microstrip 232. One end of the microstrip 232 is connected to a feed portion, and the feed portion may be a feed in the entire transfer structure, the circuit board, or an electronic device. The other end of the microstrip 232 may be connected to the radiation portion 231.

In some embodiments, the radiation portion 231 may be directly connected to the microstrip 232. In some other embodiments, the radiation portion 231 may alternatively be connected to the microstrip 232 by using a first transition portion 233, and the first transition portion 233 is also metal. Existence of the first transition portion 233 may enable impedance from the microstrip 232 to the radiation portion 231 to be in a gradient state when an electromagnetic wave enters the radiation portion 231 from the microstrip 232, so that reflection of electromagnetic wave energy at a joint between the microstrip 232 and the radiation portion 231 is reduced. This helps increase energy entering the radiation portion 231, and reduces a loss.

A width of the first transition portion 233 at a position close to the microstrip 232 may be less than a width of the first transition portion 233 at a position close to the radiation portion 231. A width direction of the first transition portion 233 may be perpendicular to a direction from the microstrip 232 to the radiation portion 231 and parallel to a direction of the first metal layer 230. For example, the width direction of the first transition portion 233 may be perpendicular to an extension direction of the microstrip 232.

FIG. 4 shows a structure of a first transition portion according to an embodiment of this application. As shown in (a) in FIG. 4, a width of the first transition portion 233 may gradually increase, for example, linearly increase, from a microstrip 232 to a radiation portion 231.

As shown in (b) in FIG. 4, a width of the first transition portion 233 may increase in a stepwise manner from a microstrip 232 to a radiation portion 231. That is, an edge of the first transition portion 233 may be in a stepwise shape. The edge of the first transition portion 233 may include a first step edge 2331 and a second step edge 2332 that are parallel to a width direction of the first transition portion 233, and a third step edge 2333 and a fourth step edge 2334 that are perpendicular to the width direction of the first transition portion 233, where the third step edge 2333 may be connected between the first step edge 2331 and the second step edge 2332, and the fourth step edge 2334 may be connected between the second step edge 2332 and the microstrip 232. A width of the first transition portion 233 on the first step edge is different from a width of the first transition portion 233 on the second step edge.

The radiation portion 231 may be rectangular. In some embodiments, an axis of symmetry in an extension direction of the microstrip 232 may be disposed to be deviated from an axis of symmetry of the radiation portion 231.

From the perspective of a port of the microstrip 231, an impedance status presented by the microstrip 232 is an impedance value conducted from a back-end circuit. Usually, in consideration of a power capacity and various factors, impedance of the microstrip 232 is set to 50 ohms. From the perspective of a transfer port, namely, the radiation portion 231, impedance presented by the radiation portion 231 is impedance of the entire transfer structure. The microstrip is disposed to be deviated from the radiation portion, so that a difference between the microstrip and the radiation portion can be reduced.

In addition, for the radiation portion 231, an impedance value presented in a middle part is usually small, which is not conducive to impedance matching, and impedance of an edge is large. A proper offset size is selected, so that difficulty in debugging impedance matching can be greatly reduced. This facilitates impedance matching between the microstrip 232 and the radiation portion 231.

In some other embodiments, an axis of symmetry in an extension direction of the microstrip 232 may be in an extension direction of an axis of symmetry of the radiation portion 231.

The radiation portion 231 is provided with an opening 234, to enable the radiation portion to form at least two resonance frequencies.

The opening 234 is a pattern formed by removing a part of metal from the radiation portion 231 to expose the dielectric layer (220) below the radiation portion 231. In some embodiments, the opening on the radiation portion 231 may also be referred to as a slot. Existence of the opening 234 on the radiation portion 231 changes capacitance and an inductance component, so that current can form a new resonance frequency near the opening. In this way, the at least two resonance frequencies are formed on the radiation portion 231, and operating bandwidth of the transfer structure is increased.

The opening 234 may be disposed inside the radiation portion 231, that is, disposed at an interval from the edge of the radiation portion 231, or may be connected to the edge of the radiation portion 231.

The outside of the radiation portion 231 and the microstrip 232 on a first metal layer 230 may further include a grounding portion 235, and the grounding portion 235 surrounds the radiation portion 231 and the microstrip 232. Metal between the radiation portion 231, the microstrip 232, and the grounding portion 235 is removed in a manner such as chemical etching, so that the radiation portion 231, the microstrip 232, and the grounding portion 235 are separated from each other or disposed at an interval from each other. Alternatively, a middle part may be removed from an entire metal layer above the dielectric layer 220, and the radiation portion 231 and the microstrip 232 are fixed to the middle part as a whole. A part of a surface of the dielectric layer 220 (where the exposed part of the dielectric layer is shown by a shadow part in FIG. 3) may be exposed in an area in which the radiation portion 231 and the microstrip 232 are not disposed in the middle part.

The grounding portion 235 may be grounded by using a transmission line, or may be connected to a second metal layer 210 by using a plurality of plated through holes 237 that are disposed on the grounding portion 235 and that are located at a position close to the radiation portion 231 and the microstrip 232, to implement grounding. A distance between the plurality of plated through holes may be less than a target threshold, so that energy of an electromagnetic wave is limited to a range of an area encircled by the plated through holes 237, and a loss of the energy of the electromagnetic wave is reduced.

In some embodiments, the several plated through holes 237 may alternatively be replaced with a metal wall that connects the grounding portion 235 and the second metal layer 210.

The grounding portion 235 may include a grounding portion body and a grounding extension portion 236. The grounding extension portion 236 is located at a position close to a position at which the microstrip 232 is connected to the radiation portion 231, and a distance between the grounding extension portion 236 and the microstrip 232 is less than a distance between the grounding portion body and the microstrip 232. A distance between the grounding portion 235 and the microstrip 232 may be a length from an inner profile of the grounding portion to the microstrip 232 in an extension direction perpendicular to the microstrip 232.

In some embodiments, as shown in FIG. 3, the grounding extension portion 236 extends from the grounding portion body to the microstrip 232.

In some other embodiments, the grounding extension portion is disposed opposite to a joint between the radiation portion 231 and the microstrip 232, and may extend to the joint between the radiation portion 231 and the microstrip 232.

Disposing of the grounding extension portion 236 may further improve impedance matching between the radiation portion 231 and the microstrip 232, and the entire grounding portion 235 and the grounding extension portion 236 is not in contact with the microstrip 232 and the radiation portion 231.

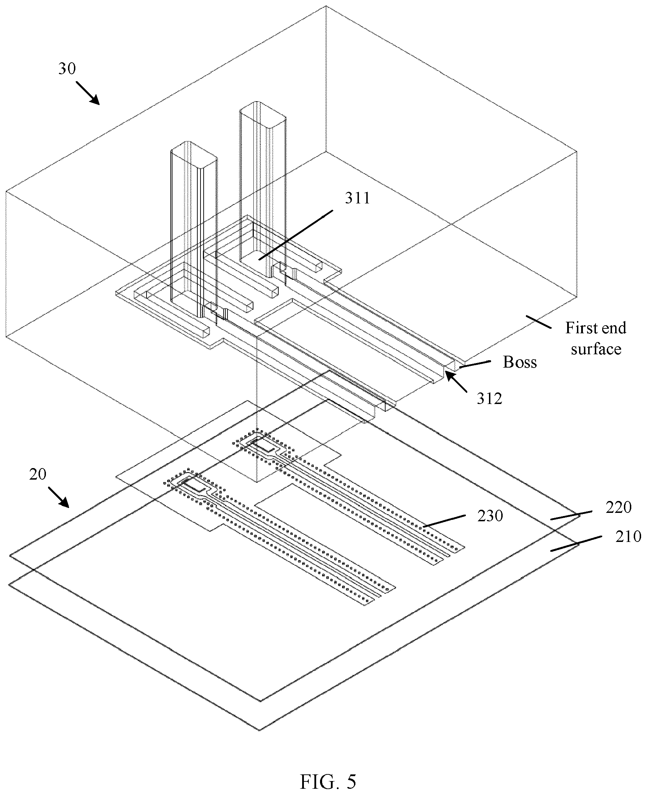

FIG. 5 is a perspective view of another transfer structure according to an embodiment of this application. The transfer structure provided in this embodiment of this application may further include a waveguide 30. The waveguide 30 is formed by processing an entire piece of metal, and each structure of the waveguide 30 in this application may be processed on a first end surface of the waveguide 30 in a processing manner such as milling.

The waveguide 30 may include a waveguide port 311 and a microstrip avoidance groove 312. The waveguide port 311 may be a standard waveguide port, for example, a WR12 waveguide port (where a size of the WR12 standard waveguide port is 3.0988 mm*1.5494 mm), or may be a non-standard waveguide port. The waveguide port 311 passes through the first end surface of the waveguide 30 to an opposite side surface of the first end surface, to export an electromagnetic wave from the waveguide 30. The first end surface of the waveguide 30 may be an end surface that is of the waveguide 30 and that is close to a circuit board 20. As shown in FIG. 4, the first metal layer 230 on the circuit board 20 may be located on a side that is of the circuit board 20 and that is close to the waveguide 30.

When the circuit board 20 cooperates with the waveguide 30, the waveguide port 311 on the first end surface of the waveguide 30 faces the first metal layer 230 on the circuit board 20, so that energy of the electromagnetic wave is radiated from the first metal layer 230 on the circuit board 20 through the waveguide port 311.

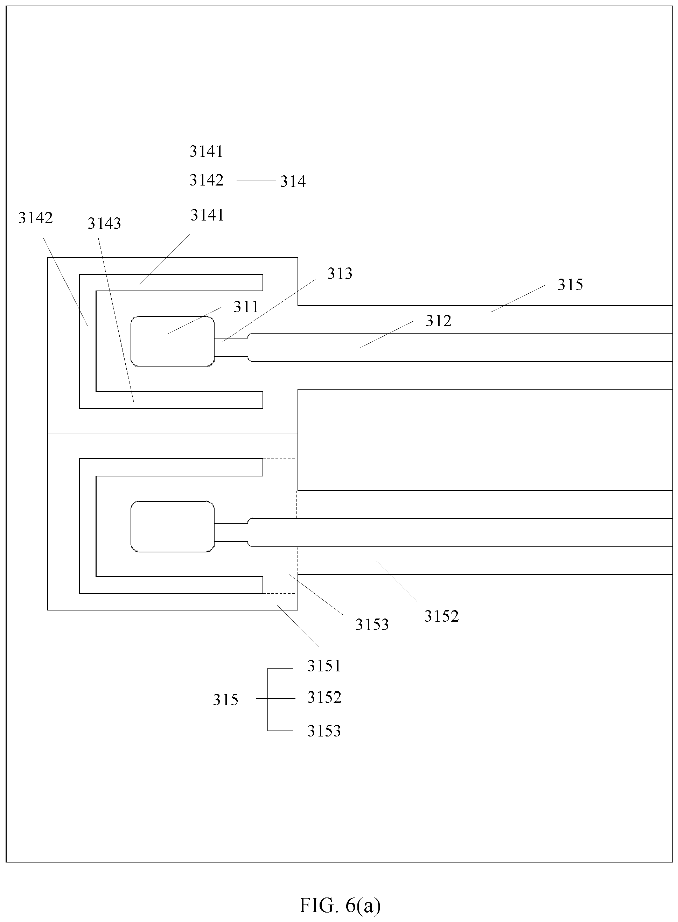

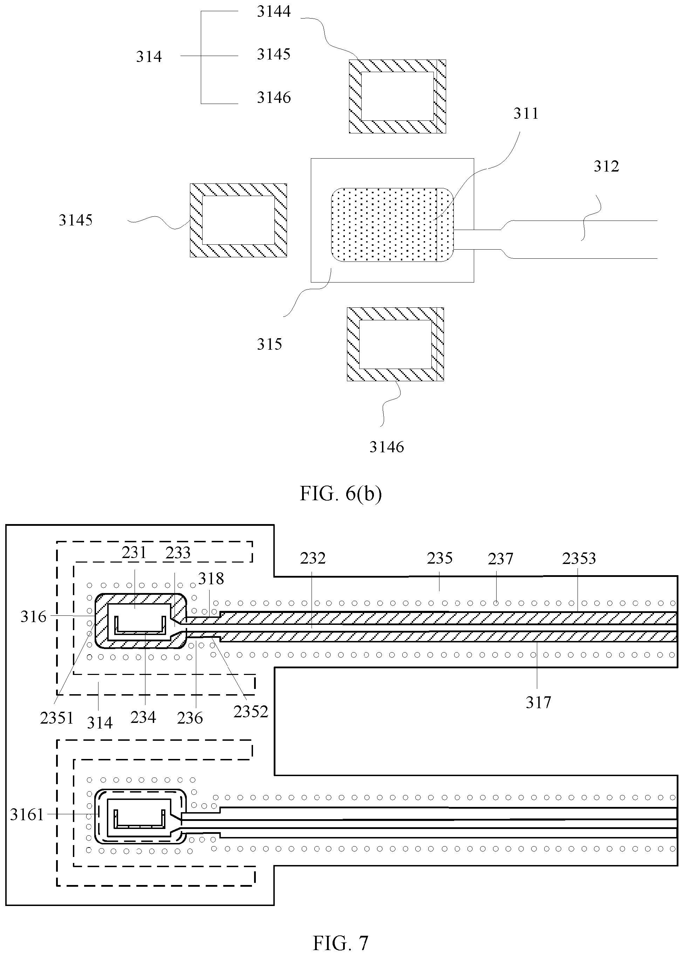

FIG. 6(a) and FIG. 6(b) are schematic structural diagrams of the first end surface of the waveguide 30 corresponding to FIG. 5. As shown in FIG. 6(a) and FIG. 6(b), the first end surface of the waveguide 30 has various processed structures. The waveguide port 311 and the microstrip avoidance groove 312 are disposed on the first end surface. The waveguide port 311 is connected to or passes through the microstrip avoidance groove 312. A depth of the microstrip avoidance groove 312 may be approximately 0.6 mm, or may be another value. This is not limited in this application.

The waveguide port 311 may be directly connected to the microstrip avoidance groove 312, or may be connected to the microstrip avoidance groove 312 through a second transition portion 313. The second transition portion 313 may be a strip-shaped groove whose width is less than that of the microstrip avoidance groove 312. A width of the second transition portion 313 may alternatively change linearly or in a stepwise manner. The width of the second transition portion 313 is a length of the second transition portion 313 in an extension direction perpendicular to the microstrip avoidance groove 312.

A shielding groove 314 may be further disposed outside the waveguide port 311. The shielding groove 314 is disposed at an interval from the waveguide port 311 and the microstrip avoidance groove 312 connected to the waveguide port 311, and is configured to limit main energy of the electromagnetic wave to a range of a side that is of the shielding groove 314 and that is close to the waveguide port 311.

The shielding groove 314 may surround a periphery of the waveguide port 311. In some embodiments, the shielding groove 314 may include a first strip-shaped groove 3141, a second strip-shaped groove 3142, and a third strip-shaped groove 3143 shown in FIG. 6(a). The first strip-shaped groove 3141 may be disposed at an interval from the third strip-shaped groove 3143, and the second strip-shaped groove 3142 may be connected between the first strip-shaped groove 3141 and the third strip-shaped groove 3143. Disposing of the three strip-shaped grooves helps limit the energy of the electromagnetic wave to a range formed by the shielding groove, and reduces a loss of the energy of the electromagnetic wave of the transfer structure.

A depth of the shielding groove 314 may not be limited. In some embodiments, the depth of the shielding groove 314 may be an odd multiple of λ/4, so that impedance on a groove opening, namely, the first end surface, is relatively large, and propagation of the energy of the electromagnetic wave is suppressed. In some other embodiments, the shielding groove 314 may pass through the first end surface of the waveguide 30 to the opposite side surface of the first end surface. A depth direction of the shielding groove is a normal direction of the first end surface of the waveguide.

The width of the shielding groove 314 may not be limited. For example, the width of the shielding groove 314 may be 0.5 mm. A width direction of the shielding groove 314 may be parallel to a direction of the first end surface and perpendicular to the extension direction of the shielding groove 314, and the extension direction of the shielding groove 314 may be an axial direction of the shielding groove 314. A shape of the shielding groove 314 may not be limited either, and may be a circle or a polygon.

In some embodiments, the shielding groove 314 may be disposed outside the waveguide port in a closed manner. For example, at least one of the first strip-shaped groove 3141, the second strip-shaped groove 3142, and the third strip-shaped groove 3143 in FIG. 6(a) may be replaced with a polygonal annular groove formed by several strip-shaped grooves that are connected to each other. For example, the shielding groove 314 may include a fourth groove 3144, a fifth groove 3145, and a sixth groove 3146 shown by shadow parts in FIG. 6(b). To be specific, an inner profile and an outer profile of each groove are concentric rectangles, and the waveguide port 311 may be disposed outside the groove. A shape of the groove may alternatively be replaced with a circular-shaped groove or another irregular-shaped groove. This is not limited in this application.

In some other embodiments, the shielding groove 314 encircles the outside of the waveguide port 311 in an unclosed manner, which is a structure of the shielding groove 314 shown in FIG. 6(a).

The waveguide 30 may further include a waveguide body and a boss 315. The waveguide body includes structures such as the waveguide port 311, the microstrip avoidance groove 312, and the shielding groove 314. The boss 315 protrudes from the waveguide body to the circuit board 20, and is in contact with the circuit board 20. A position of the boss 315 may not be limited, and a shape of the boss 315 may not be limited either. In some embodiments, as shown in FIG. 6(a) and FIG. 6(b), the boss 315 may be integrally formed. For example, the boss 315 may include a first boss portion 3151, a second boss portion 3152, and a third boss portion 3153. The first boss portion 3151 is located outside the shielding groove 314. When the shielding groove 314 includes the first strip-shaped groove 3141, the second strip-shaped groove 3142, and the third strip-shaped groove 3143, the first boss portion 3151 may further include a boss portion located on a side that is of the first strip-shaped groove 3141 and that is away from the waveguide port 311, a boss portion located on a side that is of the second strip-shaped groove 3142 and that is away from the waveguide port 311, and a boss portion located on a side that is of the third strip-shaped groove 3143 and that is away from the waveguide port 311. The second boss portion 3152 is an area located between the waveguide port 311 and the shielding groove 314. The third boss portion 3153 includes boss portions located on two sides of the microstrip avoidance groove 312, where the two boss portions are both strip-shaped bosses, and axes of the two strip-shaped bosses are parallel to the extension direction of the microstrip avoidance groove 312.

In some other embodiments, the boss may alternatively include only a portion surrounding the waveguide port, for example, may be the boss 315 shown in FIG. 6(b). The boss 315 and a part that is of the microstrip avoidance groove 312 and that is connected to the waveguide port 311 surround the waveguide port 311, and are in contact with an outer profile of the waveguide port 311. A shape and a position of the boss 315 in FIG. 6(a) and FIG. 6(b) are merely provided as an example. The shape of the boss 315 may not be limited. The boss 315 may alternatively include different quantities of sub-bosses disposed at intervals. Distances between each portion of the boss 315 and the microstrip avoidance groove 312, the waveguide port 311, and the shielding groove 314 may not be limited either.

The waveguide 30 is in contact with the circuit board 20 through the boss 315. Because an area of the boss 315 is less than an area of the first end surface of the waveguide 30, the contact between the boss 315 and the circuit board 20 reduces a contact area between the waveguide 30 and the circuit board 20, thereby reducing impact of a processing tolerance of the waveguide 30 and the circuit board 20 on assembly. A height of the boss 315 may not be limited. In some embodiments, a surface that is of the boss 315 and that faces the circuit board 20 may be a plane, to contact and cooperate with a plane structure on the circuit board 20.

In some other embodiments, a surface that is of the boss 315 and that faces the circuit board 20 may be a curved surface, to adapt to some curved surface structures on the circuit board 20 or a use case in which the circuit board 20 is a curved surface.

The surface of the boss 315 may continue to be etched to obtain another structure, such as a groove or a slot, to further reduce a contact area, thereby reducing impact of a processing tolerance of the boss 315 and the circuit board on assembly.

FIG. 7 is a projection diagram of a partial structure of the waveguide 30 on the circuit board 20 corresponding to FIG. 5. As shown in FIG. 7, a structure shown by a dashed line is a projection of the partial structure of the waveguide 30 on the circuit board 20 when the circuit board 20 cooperates with the waveguide 30. An orthographic projection 316 of an outer profile of the waveguide port 311 on the circuit board 20 and an orthographic projection 317 of an outer profile of the microstrip avoidance groove 312 on the circuit board 20 are disposed outside the radiation portion 231 and the microstrip 232. To be specific, the orthographic projection 316 of the outer profile of the waveguide port 311 is disposed at an interval from the radiation portion 231, and the orthographic projection 317 of the outer profile of the microstrip avoidance groove is disposed at an interval from the microstrip 232. In addition, when the circuit board 20 cooperates with the waveguide 30, the microstrip 232 is disposed at an interval from a groove wall of the microstrip avoidance groove 312. In this way, a short circuit occurs when the electromagnetic wave does not enter the waveguide port 311 is avoided.

An inner profile of a grounding portion 235 of the circuit board 20 includes a first portion 2351 close to the radiation portion, a second portion 2352 close to a grounding extension portion, and a third portion 2353 close to a main body of the microstrip avoidance groove. When the circuit board 20 cooperates with the waveguide 30, the first portion 2351 may be located outside the projection 316 of the waveguide port 311 on the circuit board 20, that is, the orthographic projection of the waveguide port 311 on the circuit board 20 is located in an area encircled by the inner profile of the grounding portion 235, so that an alignment error (as shown by the projection 3161 of the waveguide port on the circuit board in FIG. 7) can be reduced; or the first portion 2351 may overlap the projection 316 of the waveguide port 311 on the circuit board 20. A relationship between the second portion 2352 or the third portion 2353 and a projection 318 of an outer profile of the second transition portion 313 of the waveguide 30 and the projection 317 of the outer profile of the microstrip avoidance groove is not limited.

The waveguide 30 and the circuit board 20 may further include a structure for connection and positioning, such as a screw hole or a limiting hole, which is not shown in the figure.

In this application, bandwidth of the transfer structure is extended by changing a shape of an opening 234 of the radiation portion on the first metal layer 230 on the circuit board 20. The opening 234 of the radiation portion 231 may be disposed inside the radiation portion 231, that is, disposed at an interval from the radiation portion 231, or may intersect with an edge of the radiation portion 231.

The opening 234 of the radiation portion may be a strip-shaped opening. A length of the strip-shaped opening is a size in an extension direction of the strip-shaped opening, and a width of the strip-shaped opening may be a size perpendicular to the extension direction of the strip-shaped opening. In some embodiments, the opening may be a strip-shaped opening with an equal width. A total length of an axis of the strip-shaped opening may range from 0.5*λ to 1.5*λ. For example, the length of the opening may be 0.5*λ, X, or 1.5*λ. The width of the strip-shaped opening may range from 0.01*λ to 0.2*λ. For example, the width of the opening may be 0.05*λ or 0.1 *λ. λ is an operating wavelength of the transfer structure.

The strip-shaped opening may include different portions. In some embodiments, the strip opening may include a first strip-shaped opening segment and a second strip-shaped opening segment. One end of the first strip-shaped opening segment may be connected to one end of the second strip-shaped opening segment, so that the two strip-shaped opening segments form a specific included angle. For example, when the included angle is 90°, that is, when the first strip-shaped opening segment is perpendicular to the second strip-shaped opening segment, the opening is approximately L-shaped. When the included angle is not 90°, the opening is approximately V-shaped.

In some other embodiments, in addition to the first strip-shaped opening segment and the second strip-shaped opening segment, the opening 234 further includes a third strip-shaped opening segment. One end of the third strip-shaped opening segment is connected to the other end of the second strip-shaped opening segment, the other end of the second strip-shaped opening segment is far away from the end connected to the first strip-shaped opening segment, the third strip-shaped opening segment is parallel to and disposed at an interval from the first strip-shaped opening segment, and the second strip-shaped opening segment may be perpendicular to the first strip-shaped opening segment, so that the three segments form a U-shaped structure.

In some other embodiments, the opening 234 may include a fourth strip-shaped opening segment and a fifth strip-shaped opening segment. The fourth strip-shaped opening segment extends along a first direction to a first edge of the radiation portion, the fifth strip-shaped opening segment extends along a second direction to the first edge, and the fourth strip-shaped opening segment intersects with the fifth strip-shaped opening segment on the first edge.

The fourth strip-shaped opening segment and the fifth strip-shaped opening segment approximately form a V-shaped structure, so that an operating bandwidth range of the transfer structure is expanded.

The first edge may be adjacent to an edge that is of the radiation portion 231 and that is connected to the microstrip 232.

A "V" vertex of the V-shaped opening is located on the adjacent edge of the edge that is of the radiation portion 231 and that is connected to the microstrip 232.

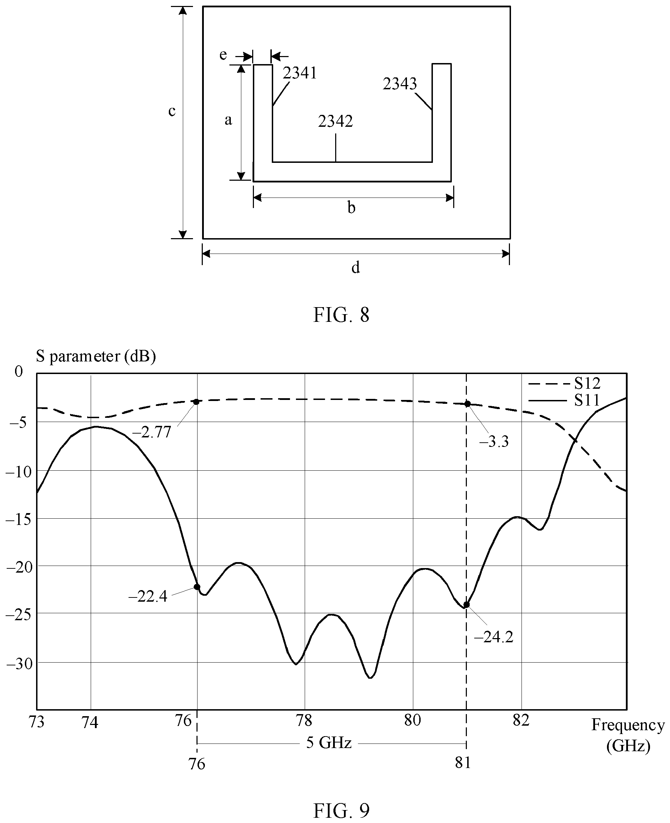

FIG. 8 is a schematic structural diagram of an opening 234 of a radiation portion on a first metal layer 230 on a circuit board 20 according to an embodiment of this application. As shown in FIG. 8, the opening is a strip-shaped opening located inside the radiation portion 231, and includes a first strip-shaped opening segment 2341, a second strip-shaped opening segment 2342, and a third strip-shaped opening segment 2343. The first strip-shaped opening segment 2341 is parallel to the third strip-shaped opening segment 2343. The second strip-shaped opening segment 2342 is connected to the first strip-shaped opening segment 2341 and the third strip-shaped opening segment 2343. The second strip-shaped opening segment 2342 is perpendicular to the first strip-shaped opening segment 2341. The three strip-shaped opening segments approximately form a U-shaped structure, and a total length 2a+b of the three strip-shaped opening segments approximately ranges from 0.5*λ to 1.5*λ. For example, a is 0.3*λ, and b is 0.6*λ; or a is 0.15*λ, and b is 0.3*λ. A width e of a strip-shaped opening segment approximately ranges from 0.01 *λ to 0.2*λ. For example, e may be 0.01 *λ, 0.05*λ, or 0.1*λ.

In some embodiments of this application, lengths of the first strip-shaped opening segment 2341 and the second strip-shaped opening segment 2342 of the U-shaped opening each may be 0.25*λ, and a length of the third strip-shaped opening segment 2343 may be 0.55*λ. A width of each strip-shaped opening segment may be 0.05*λ, and a length and a width of the entire radiation portion 231 are not limited. For example, the width c may range from 0.45*λ to λ, and the length d of the radiation portion may range from 0.75*λ to 2*λ. λ is the operating wavelength of the transfer structure.

FIG. 9 is a simulation result diagram of a relationship between a scattering parameter and an operating frequency corresponding to FIG. 8. As shown in FIG. 9, when a frequency is 76 GHz, s12 is -2.77 dB, and s11 is -22.4 dB; or when a frequency is 81 GHz, s12 is -3.3 dB, and s 11 is -24.2 dB. In a frequency range from 76 GHz to 81 GHz, a transmission coefficient (namely, the line s12 shown by a dashed line in FIG. 9) changes slowly and is greater than -3.3 dB, and a return loss (the line s11 shown by a solid line in the figure) shows several resonance points. However, in the range from 76 GHz to 81 GHz, almost both of the transmission coefficient and the return loss are less than -20 dB. It can be learned that, in this application, the transfer structure has relatively good impedance matching, so that a loss, of reflected energy of an electromagnetic wave, caused by impedance discontinuity when the electromagnetic wave enters a circuit board from a microstrip is reduced, and an operating bandwidth range is relatively large.

In addition to the foregoing U-shaped opening, the opening may alternatively be a V-shaped opening, a W-shaped opening, or the like. The total length and width of the opening meet requirements of impedance matching performance.

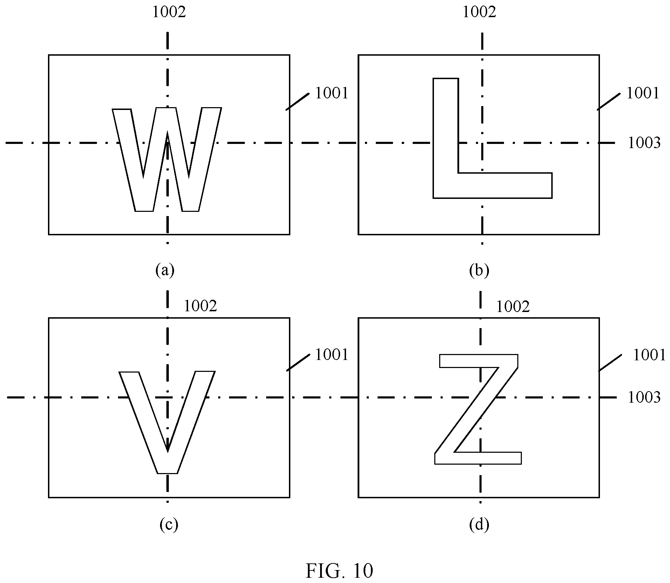

FIG. 10 is a schematic structural diagram of an opening of a radiation portion according to an embodiment of this application.

In FIG. 10, a right edge of the radiation portion is a second edge 1001, and two axes of symmetry 1002 and 1003 of the radiation portion are further shown in the figure.

(a) in FIG. 10 is an embodiment of an internal opening of a radiation portion. The internal opening includes four strip-shaped openings. One end of a first strip-shaped opening is connected to one end of a second strip-shaped opening. The first strip-shaped opening extends to an opposite edge of a second edge 1001, and an extension direction deviates from an axis of symmetry 1002 of the radiation portion. The second strip-shaped opening extends to the second edge 1001, and an extension direction deviates from the axis of symmetry 1002 of the radiation portion. One end of a third strip-shaped opening is connected to one end of a fourth strip-shaped opening. The third strip-shaped opening extends to the opposite edge of the second edge 1001, and an extension direction deviates from the axis of symmetry 1002 of the radiation portion. The fourth strip-shaped opening extends to the second edge 1001, and an extension direction deviates from the axis of symmetry 1002 of the radiation portion. The other end of the second strip-shaped opening is connected to the other end of the third strip-shaped opening. The four strip-shaped openings are W-shaped. In some embodiments, the first strip-shaped opening and the fourth strip-shaped opening may be symmetrical relative to the axis of symmetry 1002, and the second strip-shaped opening and the third strip-shaped opening may be symmetrical relative to the axis of symmetry 1002.

(b) in FIG. 10 is an embodiment of an internal opening of a radiation portion. The internal opening includes two strip-shaped openings. A first strip-shaped opening is vertically connected to a second strip-shaped opening. The first strip-shaped opening extends to an adjacent edge of a second edge 1001 along a direction of an axis of symmetry 1002 of the radiation portion. The second strip-shaped opening extends to the second edge 1001 along a direction of an axis of symmetry 1003 of the radiation portion. The two strip-shaped openings form an L shape as a whole.

(c) in FIG. 10 is an embodiment of an internal opening of a radiation portion. The internal opening includes two strip-shaped openings. One end of one strip-shaped opening is connected to one end of the other strip-shaped opening. One strip-shaped opening extends to an opposite edge of a second edge 1001, and an extension direction deviates from a direction of an axis of symmetry 1003 of the radiation portion. The other strip-shaped opening extends to the second edge 1001, and an extension direction deviates from a direction of the axis of symmetry 1003 of the radiation portion. The two strip-shaped openings form a V shape as a whole. In some embodiments, one strip-shaped opening and the other strip-shaped opening may be symmetrical relative to an axis of symmetry 1002.

(d) in FIG. 10 is an embodiment of an internal opening of a radiation portion. The internal opening includes three strip-shaped openings. One end of a first strip-shaped opening is connected to one end of a second strip-shaped opening. The first strip-shaped opening extends from the connected end to an opposite edge of a second edge 1001 along a direction of an axis of symmetry 1003 of the radiation portion. The second strip-shaped opening extends from the connected end to the opposite edge of the second edge 1001 along a direction that deviates from the axis of symmetry. The third strip-shaped opening is connected to one end that is of the second strip-shaped opening and that is far away from the end connected to the first strip-shaped opening, and extends to the second edge 1001 along the direction of the axis of symmetry 1003 of the radiation portion. The three strip-shaped openings form a Z shape as a whole.

It should be understood that, in addition to the shapes of the internal openings of the radiation portions shown in FIG. 7 and FIG. 10, the opening may be in another shape, provided that the internal opening is not closed and meets the foregoing requirements for the total length and width of the opening.

In addition, in addition to a case in which the opening is completely inside, the opening may alternatively be rotated by a specific angle, or one of two ends of the opening is connected to an edge of the radiation portion.

According to various opening structures shown in FIG. 10, a coupling capacitance value of a frequency of the transfer structure is changed, a resonance point is increased, and matching bandwidth of the transfer structure is expanded.

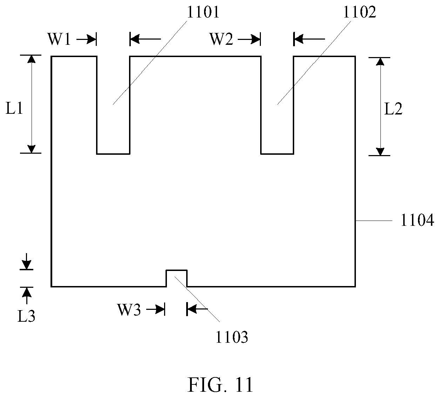

FIG. 11 is a schematic structural diagram of an opening of a radiation portion according to an embodiment of this application. As shown in FIG. 11, two edges of the radiation portion are provided with three openings. A size of a first opening 1101 is W1*L1, a size of a second opening 1102 is W2*L2, and a size of a third opening 1103 is W3*L3 (where a right edge of the radiation portion is a second edge 1104, and is connected to a microstrip 232, and the microstrip is not shown in the figure). L1 or L2 is less than a width of the radiation portion, and W1+W2+W3 is less than a length of the radiation portion. W1, W2, and W3 are sizes of the openings in a direction perpendicular to the second edge, and L1, L2, and L3 are sizes of the openings in a direction parallel to the second edge.

In this embodiment of this application, W1 *L1 may be approximately (0.1 *λ)*(0.15*λ), W1*L1 may also be approximately (0.1*λ)*(0.15*λ), and W3*L3 may be approximately (0.05*λ)*(0.05*λ).

The openings at the edges of the radiation portion can increase a current diffraction path, extend operating bandwidth of the transfer structure, and improve an application scenario of the transfer structure in this application.

In this embodiment of this application, opening may also be performed on the second edge that is of the radiation portion 231 and that is connected to the microstrip 232, and the edge opposite to the edge that is of the radiation portion 231 and that is connected to the microstrip 232.

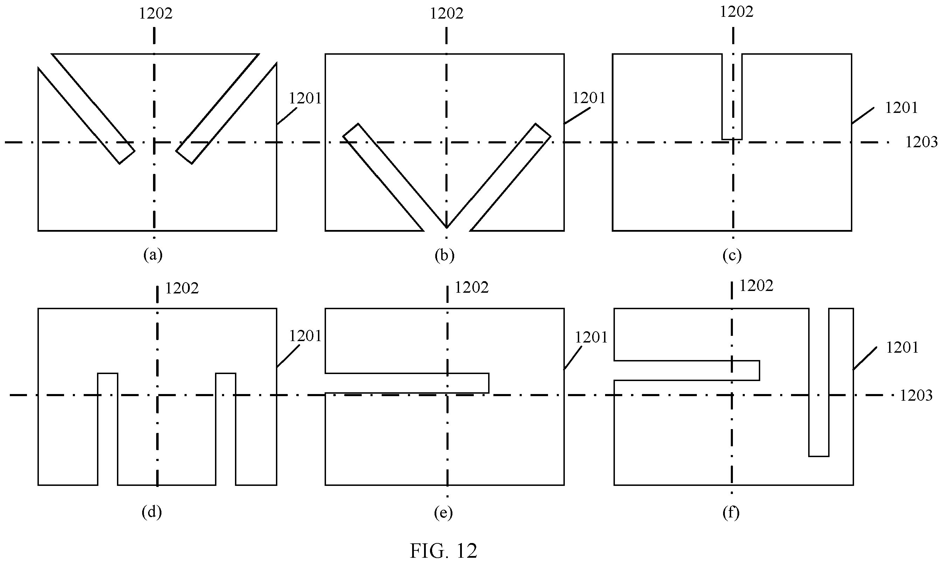

FIG. 12 is a schematic structural diagram of an opening of a radiation portion according to an embodiment of this application.

In FIG. 12, a right edge of the radiation portion is defined as a second edge 1201, namely, an edge that is of the radiation portion 231 and that is connected to a microstrip 232 (where the microstrip is not shown), and two axes of symmetry of the radiation portion are respectively 1202 and 1203 (where symmetry of the opening is not considered).
(a) in FIG. 12 is an embodiment of an edge opening of a radiation portion. The edge opening includes two strip-shaped openings. One strip-shaped opening extends from a vertex at which an adjacent edge of a second edge intersects with the second edge to an opposite edge of the adjacent edge, and an extension direction deviates from a direction of an axis of symmetry 1202 of the radiation portion. The other strip-shaped opening extends from another vertex of the adjacent edge to the opposite edge of the adjacent edge, and an extension direction deviates from the direction of the axis of symmetry 1202 of the radiation portion.
   In another embodiment, one strip-shaped opening extends from a vertex at which an adjacent edge of a second edge intersects with the second edge to an opposite edge of the second edge, and an extension direction deviates from a direction of an axis of symmetry 1202 of the radiation portion. The other strip-shaped opening extends from another vertex of the adjacent edge to the second edge, and an extension direction deviates from a direction of the axis of symmetry 1202 of the radiation portion.
(b) in FIG. 12 is another embodiment of an edge opening of a radiation portion. The edge opening includes two strip-shaped openings. One end of one strip-shaped opening is connected to one end of the other strip-shaped opening at a point on an adjacent edge of a second edge. One strip-shaped opening extends from the connected point to the second edge, and an extension direction deviates from a direction of an axis of symmetry 1202. The other strip-shaped opening extends from the connected point to an opposite edge of the second edge, and an extension direction deviates from a direction of the axis of symmetry of the radiation portion.
(c) in FIG. 12 is another embodiment of an edge opening of a radiation portion. The edge opening includes one strip-shaped opening. One end of the strip-shaped opening is located at a point on one adjacent edge of a second edge, and extends to the other adjacent edge. In an embodiment, an extension direction is parallel to a direction of an axis of symmetry 1202 of the radiation portion.
(d) in FIG. 12 is another embodiment of an edge opening of a radiation portion. The edge opening includes two strip-shaped openings. One end of one strip-shaped opening is located at a point on one adjacent edge of a second edge, and extends to the other adjacent edge, and an extension direction is parallel to a direction of an axis of symmetry 1202 of the radiation portion. One end of the other strip-shaped opening is located at another point of the adjacent edge, and extends to the other adjacent edge, and an extension direction is parallel to the direction of the axis of symmetry 1202 of the radiation portion. The two strip-shaped openings may be symmetrical relative to the axis of symmetry 1202 of the radiation portion 231.
(e) in FIG. 12 is another embodiment of an edge opening of a radiation portion. The edge opening includes one strip-shaped opening. One end of the strip-shaped opening is located at a point on an opposite edge of a second edge, and extends to the second edge, and an extension direction is parallel to a direction of an axis of symmetry 1203 of the radiation portion. In other words, the strip-shaped opening may be disposed vertically relative to the second edge.
(f) in FIG. 12 is another embodiment of an edge opening of a radiation portion. The edge opening includes two strip-shaped openings. One end of one strip-shaped opening is located on an opposite edge of a second edge, and extends to the second edge, and an extension direction is parallel to a direction of an axis of symmetry 1203 of the radiation portion. One end of the other strip-shaped opening is located at a point on an adjacent edge of the second edge, and extends to an opposite edge of the adjacent edge, and an extension direction is parallel to a direction of another axis of symmetry 1202 of the radiation portion. The two strip-shaped openings do not intersect with each other.

It can be learned from FIG. 12 that a length, a width, and a position of the edge opening may be set randomly, and a technical effect of this application can be achieved, that is, bandwidth of a transfer structure is extended.

In addition, the transfer structure in this application may be implemented in an array manner. For a circuit board 20, a plurality of radiation portions and a microstrip 232 are arranged on the circuit board 20 in a specific manner. Waveguides may also be arranged in a same manner as the radiation portions. In addition, the waveguides may share one or more edges of a shielding groove.

According to various opening structures shown in FIG. 12, a coupling capacitance value of a frequency of the transfer structure is changed, a resonance point is increased, and matching bandwidth of the transfer structure is expanded.

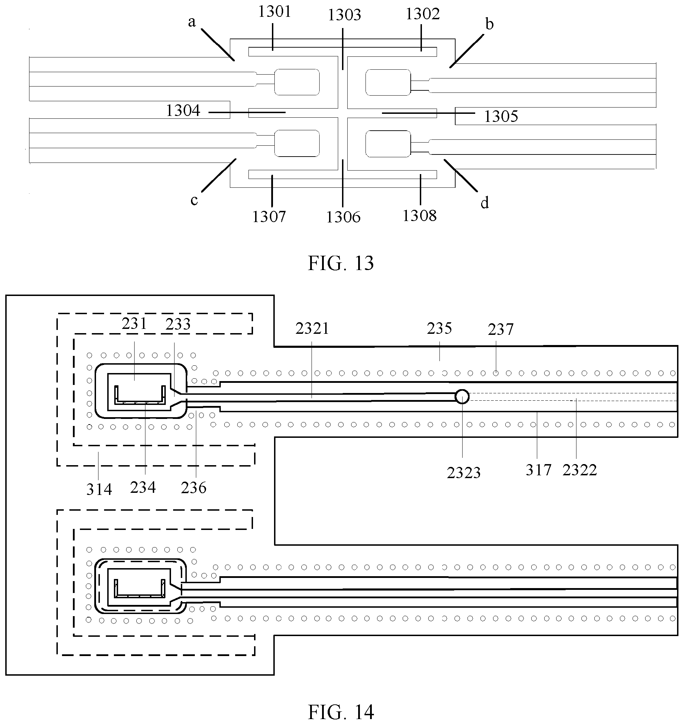

FIG. 13 is a schematic structural diagram of an array of a transfer structure according to an embodiment of this application. As shown in FIG. 13, the transfer structure may include a plurality of waveguides. The plurality of waveguides may include a waveguide a, a waveguide b, a waveguide c, and a waveguide d, and the plurality of waveguides may be, for example, arranged in an array. A waveguide port of the waveguide a may be disposed opposite to a waveguide port of the waveguide b. A microstrip avoidance groove of the waveguide a and a microstrip avoidance groove of the waveguide b are respectively located on two sides of the waveguide ports of the waveguide a and the waveguide b, and extend in directions away from the waveguide ports. The waveguide port of the waveguide a is disposed opposite to a waveguide port of the waveguide c. The microstrip avoidance groove of the waveguide a is disposed opposite to a microstrip avoidance groove of the waveguide c. The waveguide port of the waveguide c may be disposed opposite to a waveguide port of the waveguide d. The microstrip avoidance groove of the waveguide c and a microstrip avoidance groove of the waveguide d are respectively located on two sides of the waveguide ports of the waveguide c and the waveguide d, and extend in directions away from the waveguide ports.

A shielding groove includes a first edge 1301, a second edge 1302, a third edge 1303, a fourth edge 1304, a fifth edge 1305, a sixth edge 1306, a seventh edge 1307, and an eighth edge 1308. The first edge 1301, the third edge 1303, and the fourth edge 1304 encircle the waveguide port 1 of the waveguide a. The second edge 1302, the third edge 1303, and the fifth edge 1305 encircle the waveguide port 2 of the waveguide b. The fourth edge 1304, the sixth edge 1306, and the seventh edge 1307 encircle the waveguide port 3 of the waveguide c. The fifth edge 1305, the sixth edge 1306, and the eighth edge 1308 encircle the waveguide port 4 of the waveguide d. The waveguide ports of the waveguide a and the waveguide b are located on two sides of the third edge 1303. The waveguide ports of the waveguide a and the waveguide c are located on two sides of the fourth edge 1304. The waveguide ports of the waveguide b and the waveguide d are located on two sides of the fifth edge 1305. The waveguide ports of the waveguide c and the waveguide d are located on two sides of the sixth edge 1306. Adjacent waveguides share one edge of the shielding groove. The waveguide a and the waveguide b share the third edge 1303 of the shielding groove. The waveguide a and the waveguide c share the fourth edge 1304 of the shielding groove. The waveguide b and the waveguide d share the fifth edge 1305 of the shielding groove. The waveguide c and the waveguide d share the sixth edge 1306 of the shielding groove.

The radiation portions on the circuit board 20 may be arranged inside the four waveguide ports in FIG. 13 in a same manner, and the microstrip 232 extends along the four avoidance grooves of the microstrip 232. Therefore, the technical solutions of the transfer structure in this application may form an array, and the array is integrated into another apparatus or module.

It should be understood that FIG. 13 merely provides an example of a manner of arranging the waveguide, the radiation portion, and the microstrip 232 in an array. In this application, the waveguide, the radiation portion, and the microstrip 232 may alternatively be arranged in another manner, to enhance integration of the transfer structure in this application.

In addition, the foregoing shows application in which the microstrip 232 and the waveguide on the circuit board 20 of the transfer structure in this application are located on a same side, that is, coplanar transfer between the microstrip or the feed and the waveguide are performed on a same side of the circuit board. In this application, transfer is performed on a side of the first metal layer. The transfer structure in this application may alternatively be used for non-coplanar transfer.

FIG. 14 is a schematic diagram of another transfer structure according to an embodiment of this application.

It can be learned from FIG. 14 that a microstrip 232 is divided into two segments: a first segment 2321 on a first metal layer 230 that is in contact with a waveguide and a second segment 2322 (shown by a dashed line in FIG. 12) on a second metal layer 210 on a circuit board 20. The second segment 2322 on the second metal layer 210 may be connected to a feed of the entire transfer structure. The two segments of the microstrip are connected through a plated through hole 2323. In this way, an electromagnetic wave is transferred with the waveguide from a side of the second metal layer 210 through the plated through hole on the first metal layer 230. According to the transfer structure in this embodiment of this application, non-coplanar transfer between the circuit board 20 and the waveguide can be flexibly performed. Compared with a common non-coplanar transfer manner, a plated through hole solution is easy to integrate, and bandwidth of the transfer structure in this application can be effectively extended through opening of a radiation portion.

The transfer structure described in this application can be flexibly used in various coplanar transfer and non-coplanar transfer scenarios, to effectively extend the bandwidth of the transfer structure, and cover a common bandwidth range. In addition, the transfer structure is easy to assemble, and can be used in various radar and test scenarios.

The transfer structure in this application is described by using only an example in which the feed enters the transfer structure of the radiation portion from the microstrip 23. In another case, the feed of the transfer structure in this application may alternatively be a structure on a waveguide side, including the waveguide, an upper-level antenna, an SIW, or the like, so that the energy of the electromagnetic wave is introduced from the waveguide to the microstrip, and enters another structure of the circuit board for further processing.

An embodiment of this application further provides an antenna. The antenna includes any structure in FIG. 2 to FIG. 14.

An embodiment of this application further provides a detection apparatus. The detection apparatus includes the foregoing antenna. For example, the detection apparatus is radar.

An embodiment of this application further provides a terminal. The terminal includes the foregoing detection apparatus. For example, the terminal may be a vehicle.

An embodiment of this application further provides a vehicle. The vehicle includes the foregoing detection apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transfer structure, comprising a circuit board (20), wherein the circuit board (20) comprises a first metal layer (230), a second metal layer (210), and a dielectric layer (220), the dielectric layer (220) is located between the first metal layer (230) and the second metal layer (210), the first metal layer (230) comprises a radiation portion (231) and a microstrip (232), the microstrip (232) is connected to one end of the radiation portion (231), and the second metal layer (210) is grounded, wherein
the radiation portion (231) is provided with an opening (234), to enable the radiation portion (231) to form at least two resonance frequencies.

2. The transfer structure according to claim 1, wherein the transfer structure further comprises a waveguide (30) located on a side that is of the circuit board (20) and that is close to the first metal layer (230), the waveguide (30) comprises a microstrip avoidance groove (312) and a waveguide port (311), the microstrip (232) is disposed opposite to the microstrip avoidance groove (312) at an interval from a groove wall of the microstrip avoidance groove (312), the waveguide port (311) is disposed opposite to the radiation portion (231), and a signal emitted by the radiation portion (231) passes through the waveguide port (311) and is emitted out of the transfer structure.

3. The transfer structure according to claim 1 or 2, wherein the radiation portion (231) is a rectangle, and the microstrip (232) is disposed to be deviated from an axis of symmetry of the radiation portion (231).

4. The transfer structure according to any one of claims 1 to 3, wherein the opening (234) is a strip-shaped opening, and the opening (234) is disposed at an interval from an edge of the radiation portion (231).

5. The transfer structure according to claim 3, wherein the opening (234) is a strip-shaped opening, and one end of the opening (234) is connected to an edge that is of the radiation portion (231) and that is far away from an edge connected to the microstrip (232).

6. The transfer structure according to claim 4 or 5, wherein the opening (234) comprises a first strip-shaped opening segment and a second strip-shaped opening segment, and one end of the second strip-shaped opening segment is connected to one end of the first strip-shaped opening segment.

7. The transfer structure according to claim 6, wherein the opening (234) further comprises a third strip-shaped opening segment, one end of the third strip-shaped opening segment is connected to the other end of the second strip-shaped opening segment, the other end of the second strip-shaped opening segment is far away from the end connected to the first strip-shaped opening segment, and the third strip-shaped opening segment is parallel to and disposed at an interval from the first strip-shaped opening segment.

8. The transfer structure according to claim 6 or 7, wherein the second strip-shaped opening segment is disposed vertically relative to the first strip-shaped opening segment.

9. The transfer structure according to any one of claims 4 to 8, wherein a length of the opening (234) ranges from 0.5*λ to 1.5*λ, a width of the opening (234) ranges from 0.01*λ to 0.2*λ, and λ is an operating wavelength of the transfer structure.

10. The transfer structure according to claim 3, wherein the opening (234) comprises a fourth strip-shaped opening segment and a fifth strip-shaped opening segment, the fourth strip-shaped opening segment extends along a first direction to a first edge of the radiation portion (231), the fifth strip-shaped opening segment extends along a second direction to the first edge, and the fourth strip-shaped opening segment intersects with the fifth strip-shaped opening segment on the first edge.

11. The transfer structure according to claim 10, wherein the first edge is adjacent to an edge that is of the radiation portion (231) and that is connected to the microstrip (232).

12. The transfer structure according to any one of claims 2 to 11, wherein the waveguide (30) further comprises a shielding groove (314), and the shielding groove (314) is disposed on a side that is of the waveguide (30) and that is close to the waveguide port (311), and is disposed at an interval from the waveguide port (311) and the microstrip avoidance groove (312).

13. The transfer structure according to claim 12, wherein the shielding groove (314) surrounds a periphery of the waveguide port (311).

14. The transfer structure according to claim 12 or 13, wherein a depth of the shielding groove (314) is an odd multiple of λ/4, and λ is an operating wavelength of the transfer structure.

15. The transfer structure according to any one of claims 2 to 14, wherein the waveguide (30) further comprises a waveguide body and a boss (315), and the boss (315) protrudes from the waveguide body towards the circuit board (20), and is in contact with the circuit board (20).

16. The transfer structure according to any one of claims 1 to 15, wherein the first metal layer (230) further comprises a first transition portion (233) configured for impedance matching between the microstrip (232) and the radiation portion (231), and the first transition portion (233) is connected between the radiation portion (231) and the microstrip (232) along a direction from the radiation portion (231) to the microstrip (232).

17. The transfer structure according to any one of claims 1 to 16, wherein the first metal layer (230) further comprises a grounding portion, the grounding portion surrounds a periphery of the radiation portion (231) and the periphery of the microstrip (232), and is disposed at an interval from the radiation portion (231) and the microstrip (232), the grounding portion is in contact with the waveguide (30), and the grounding portion is conducted with the second metal layer (210).

18. The transfer structure according to claim 17, wherein the grounding portion (235) is conducted with the second metal layer (210) through a plated through hole (237) or a metal wall.

19. The transfer structure according to claim 17 or 18, wherein an orthographic projection of the waveguide port (311) on the circuit board (20) is located in an area encircled by an inner profile of the grounding portion (235).

20. The transfer structure according to any one of claims 17 to 19, wherein the grounding portion comprises a grounding portion body and a grounding extension portion (236), the grounding extension portion (236) is opposite to and disposed at an interval from a joint between the microstrip (232) and the radiation portion (231), and the grounding extension portion (236) extends from the grounding portion body towards the joint.

21. An antenna, wherein the antenna comprises the transfer structure according to any one of claims 1 to 20.

22. A detection apparatus, wherein the detection apparatus comprises the antenna according to claim 21.

23. A terminal, wherein the terminal comprises the detection apparatus according to claim 22.

24. The terminal according to claim 23, wherein the terminal is a vehicle.
